# EUROPEAN PATENT APPLICATION

(11) **EP 1 936 770 A1**
(43) Date of publication of application: **25.06.2008**
(21) Application number: 07019193.7
(22) Date of filing: 28.09.2007
(51) Int. Cl.: H02H 3/087, H02H 9/00, H04N 5/63

(54) **Information device supplying power to device connected thereto by cable**

(30) Priority: 21.12.2006 JP 2006344519
(71) Applicant: Funai Electric Co., Ltd., Daito-shi, Osaka 574-0013 (JP)
(72) Inventor: Udagawa, Kazuhiko, Osaka 574-0013 (JP)
(74) Representative: Grünecker, Kinkeldey, Stockmair & Schwanhäusser Anwaltssozietät

(57) **Abstract**

A power supply apparatus (6) included in an information device supplies a power supply voltage (Vout) to a device connected to the information device by a cable including a power supply line (4A). The power supply apparatus (6) includes a voltage supply circuit (15) that outputs the power supply voltage (Vout) to the power supply line (4A) and stops outputting the power supply voltage (Vout) according to a stop signal (SIG), a reference voltage source (12) that outputs a predetermined voltage as a reference voltage (Vref), a comparator (13) that compares the power supply voltage (Vout) with the reference voltage (Vref) to output a voltage (Vm) showing a comparison result, and a power supply control circuit (14) that receives the voltage (Vm) showing the comparison result and outputs the stop signal (SIG) in the case where the power supply control circuit determines that the power supply voltage (Vout) is continuously lower than the reference voltage (Vref) for a predetermined period of time.

## Description

### BACKGROUND OF THE INVENTION

### Field of the Invention

The present invention relates to an information device, and particularly to an information device having the capability of supplying power to an associated device connected by a cable.

### Description of the Background Art

Generally, in an audio/video system, a video signal output apparatus (such as optical disc reproduction apparatus) outputting a video signal and a video display apparatus such as display are connected by a cable. If a magnitude of voltage of a signal transmitted through the cable or a magnitude of current flowing through the cable is not appropriate, failure of the apparatus could occur. Therefore, for the system as described above, this problem has to be prevented.

Japanese Patent Laying-Open No. 2005-084116 for example discloses a video display apparatus that can prevent an input video signal and an output video signal from colliding with each other. The video display apparatus includes signal switch means. Specifically, in the case where a video signal that is output from an external video display apparatus and an internally generated video signal may collide with each other in the video display apparatus, the signal switch means makes a switch between the state of allowing the externally applied video signal to be input and the state of allowing the internally generated video signal to be output.

In contrast, Japanese Patent Laying-Open No. 2002-084749 discloses a power supply control circuit that can prevent overcurrent. The power supply control circuit monitors the input power to a power supply apparatus so that the input current can be kept at a certain value or less regardless of variation of the input voltage to the power supply apparatus. The power supply control circuit includes an output power determination unit determining an output power value of the power supply apparatus according to an input power value given as information from input power monitor means, and a power adjustment unit making an adjustment so that the power equal to the output power value is output from the power supply apparatus.

In recent years, the HDMI (High Definition Multimedia Interface) standard has been proposed as an interface standard for connecting video devices to each other. Products having an interface capability conforming to the HDMI standard are appearing on the market. The HDMI standard is based on the DVI (Digital Video Interface) which is a standard for connection between a personal computer (PC) and a display, and adds to the DVI the capability of supporting home-use products.

Section 4.2.7 of the HDMI specification specifies that all source devices (device which outputs a video signal such as optical disc reproduction apparatus) shall allow current of a minimum of 55 mA to be supplied from a power supply pin supplying DC power of +5 V, and that the voltage here shall be kept within a range of 4.8 V to 5.3 V. This section also specifies that overcurrent protection is necessary if current of at least 0.5 A flows.

The aforementioned publications, however, do not specifically disclose a method for preventing overcurrent from flowing through a cable for an information device including a video device.

### SUMMARY OF THE INVENTION

An object of the present invention is to provide an information device that can prevent overcurrent from flowing to a device that is connected by a cable to the information device.

In summary, according to an aspect of the present invention, the invention is an information device including a power supply circuit connected to a video reproduction device by a cable conforming to the HDMI (High Definition Multimedia Interface) standard, and supplying a power supply voltage through the cable to a load included in the video reproduction device. The power supply circuit includes: a voltage supply unit outputting the power supply voltage to the cable and stopping outputting the power supply voltage according to a stop signal; a reference voltage source outputting a predetermined voltage as a reference voltage; a comparison unit comparing the power supply voltage with the reference voltage and outputting a comparison result; and a control unit receiving the comparison result and outputting the stop signal in a case where the control unit determines that the power supply voltage is continuously lower than the reference voltage for a predetermined period of time. The information device further includes a video signal output circuit outputting a video signal to the video reproduction device through the cable.

According to another aspect of the present invention, the invention is an information device including a power supply circuit connected to a data processing device by a cable, and supplying a power supply voltage through the cable to a load included in the data processing device. The power supply circuit includes: a voltage supply unit outputting the power supply voltage to the cable and stopping outputting the power supply voltage according to a stop signal; a reference voltage source outputting a predetermined voltage as a reference voltage; a comparison unit comparing the power supply voltage with the reference voltage and outputting a comparison result; and a control unit receiving the comparison result and outputting the stop signal in a case where the control unit determines that the power supply voltage is continuously lower than the reference voltage for a predetermined period of time. The information device further includes a data output circuit outputting data to be processed to the data processing device through the cable.

Preferably, the cable is a cable conforming to the HDMI (High Definition Multimedia Interface) standard. The data to be processed is video data. The data processing device reproduces the video data.

More preferably, after the predetermined period of time has passed since the power supply voltage becomes lower than the reference voltage, the control unit determines whether or not the power supply voltage is lower than the reference voltage. The control unit determines, in a case where the power supply voltage is lower than the reference voltage, that the power supply voltage is continuously lower than the reference voltage for the predetermined period of time.

A chief advantage of the present invention is, therefore, that an information device can be implemented that can prevent overcurrent from flowing to a device connected by a cable to the information device.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a configuration diagram of a system including an information device of an embodiment.
Fig. 2 is a diagram showing a configuration of a power supply apparatus 6 in Fig. 1.
Fig. 3 is a diagram showing a comparative example of power supply apparatus 6 in Fig. 2.
Fig. 4 is a flowchart illustrating a process followed by a power supply control circuit 14 in Fig. 2.

### DESCRIPTION OF THE PREFERRED EMBODIMENTS

In the following, an embodiment of the present invention will be described in detail with reference to the drawings. In the drawings, like or corresponding components are denoted by like reference characters and a description thereof will not be repeated.

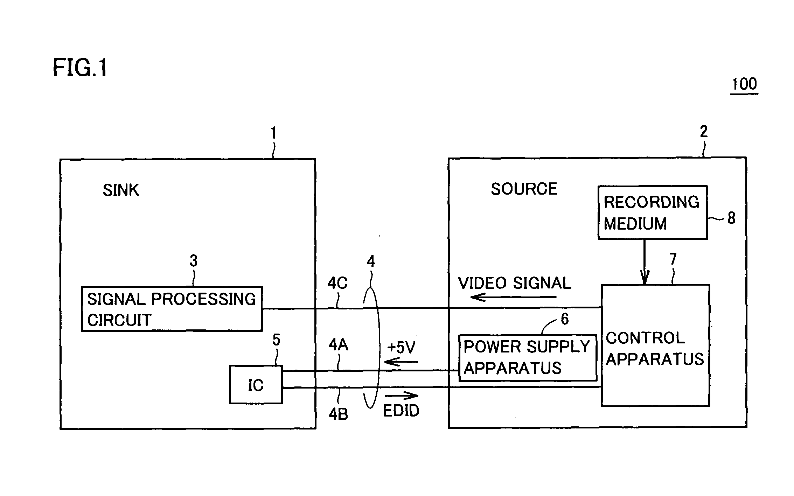

Fig. 1 is a configuration diagram of a system including an information device of the present embodiment.

Referring to Fig. 1, a video system 100 includes a sink (SINK) device 1 which is a video reproduction circuit, a source (SOURCE) device 2 which is the information device of the present embodiment and an HDMI cable 4. "Sink device" refers to a device receiving a digital video signal and is a television for example. "Source device" refers to a device outputting a digital video signal and is an optical disc reproduction device for example. The type of the optical disc reproduced by the optical disc reproduction device includes DVD (Digital Versatile Disc) for example. The disc, however, is not limited to DVD.

HDMI cable 4 is connected between sink device 1 and source device 2 to transmit various types of signals (data). HDMI cable 4 is also used for supplying power to a load in sink device 1 from source device 2.

Sink device 1 includes a signal processing circuit 3 and an IC (Integrated Circuit) 5. Source device 2 includes a power supply apparatus 6 and a control apparatus 7. HDMI cable 4 includes a power supply line 4A and data lines 4B, 4C.

Upon connection by HDMI cable 4 between sink device 1 and source device 2, power supply apparatus 6 supplies power (DC voltage of +5 V) to IC 5 through power supply line 4A. Receiving the power from power supply apparatus 6, IC 5 transmits, to control apparatus 7 through data line 4B, EDID (Extended Display Identification Data) which is information specific to sink device 1. For example, if sink device 1 is a television, EDID includes information about the resolution of the television.

Control apparatus 7 reads video data recorded on a recording medium 8. Control apparatus 7 processes the read video data according to details of the EDID, and outputs to data line 4C a video signal (digital video signal) corresponding to the processed video data. Receiving the video signal through data line 4C, signal processing circuit 3 reproduces the video data read from recording medium 8.

If an abnormality occurs in a circuit within IC 5, the resistance value between a power supply line and a ground line in IC 5 decreases for example. In this case, there is a possibility that current larger than the normal one flows through power supply line 4A. Section 4.2.7 of the HDMI specification specifies that overcurrent protection is necessary in the case where current of at least 0.5 A flows. Therefore, power supply apparatus 6 has the overcurrent protection capability.

In the case where the voltage of power supply line 4A decreases to become lower than a predetermined voltage, power supply apparatus 6 stops the power supply to IC 5. The case where the voltage of power supply line 4A decreases to become lower than a predetermined voltage is namely the case where current flowing through power supply line 4A becomes larger than the normal one. When power supply apparatus 6 stops the power supply to IC 5, no current flows through power supply line 4A. Accordingly, source device 2 which is the information device of the present embodiment can implement the overcurrent protection capability specified in section 4.2.7 of the HDMI specification.

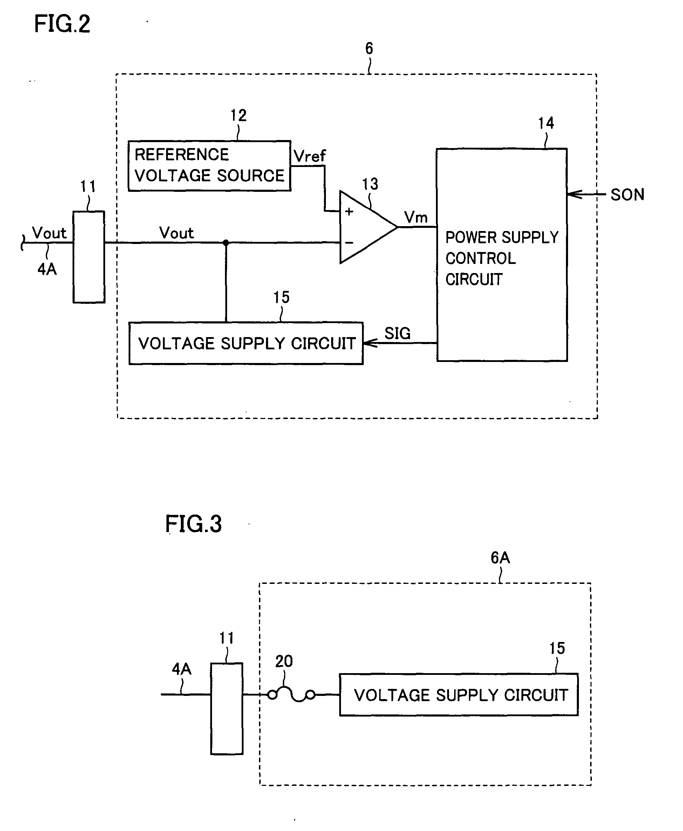

Fig. 2 is a diagram showing a configuration of power supply apparatus 6 in Fig. 1.

Referring to Fig. 2, power supply apparatus 6 includes a reference voltage source 12, a comparator 13, a power supply control circuit 14 and a voltage supply circuit 15.

Reference voltage source 12 generates and outputs reference voltage Vref. Reference voltage Vref is constant and is 3.3 V for example.

Voltage supply circuit 15 outputs voltage Vout. Voltage Vout is output through an HDMI connector 11 to power supply line 4A.

Comparator 13 compares voltage Vout with reference voltage Vref and outputs voltage Vm which shows the result of the comparison. If reference voltage Vref is higher than voltage Vout, the level of voltage Vm is H (logical high) level. If voltage Vout is higher than reference voltage Vref, the level of voltage Vm is L (logical low) level. For example, H level refers to the state where voltage Vm is higher than a predetermined voltage (2.5 V for example), and L level refers to the state where voltage Vm is lower than this predetermined voltage.

Receiving signal SON, power supply control circuit 14 starts monitoring voltage Vm. Signal SON is a signal for informing power supply control circuit 14 of the fact that source device 2 in Fig. 1 is powered. Signal SON is transmitted for example from control apparatus 7 in Fig. 1 to power supply control circuit 14. Until receiving signal SON, power supply control circuit 14 is kept in the standby state.

If the level of voltage Vm is H level, power supply control circuit 14 outputs signal SIG. Receiving signal SIG, voltage supply circuit 15 stops outputting voltage Vout.

The configuration of voltage supply circuit 15 is not limited to a particular one. For example, an NPN transistor and a drive circuit supplying current to the base of the NPN transistor may be used to configure voltage supply circuit 15. In this case, the collector of the NPN transistor is connected to a voltage source (not shown) and voltage Vout is output from the emitter of the NPN transistor. Further, in the case where signal SIG is not input, the drive circuit supplies current to the base of the NPN transistor. In the case where signal SIG is received, the drive circuit stops supplying the base current.

Fig. 3 is a diagram showing a comparative example of power supply apparatus 6 in Fig. 2.

Referring to Figs. 3 and 2, a power supply apparatus 6A includes a voltage supply circuit 15 and a fuse 20. HDMI connector 11 and power supply line 4A in Fig. 3 and those in Fig. 2 are configured in the same manner. When curent flowing through power supply line 4A, namely the current which is output from voltage supply circuit 15 becomes excessively large, fuse 20 blows. In this way, power supply apparatus 6A can implement the overcurrent protection with the simple configuration.

However, once fuse 20 blows, power supply apparatus 6A (namely source device) cannot be returned to the original state as long as the fuse is not replaced. This will be a factor responsible for impaired convenience to the user.

In contrast, according to the present embodiment, the voltage supply to the sink device is stopped in the case where a load (IC) in the sink device has any problem. Further, according to the present embodiment, in the case where the sink device connected to the source device is replaced with a normal product, the power can be supplied to a load included in the new sink device after the replacement, without repairing the power supply apparatus of the source device. In this way, the present embodiment can implement the overcurrent protection capability specified in section 4.2.7 of the HDMI specification. Further, the present embodiment provides convenience to the user.

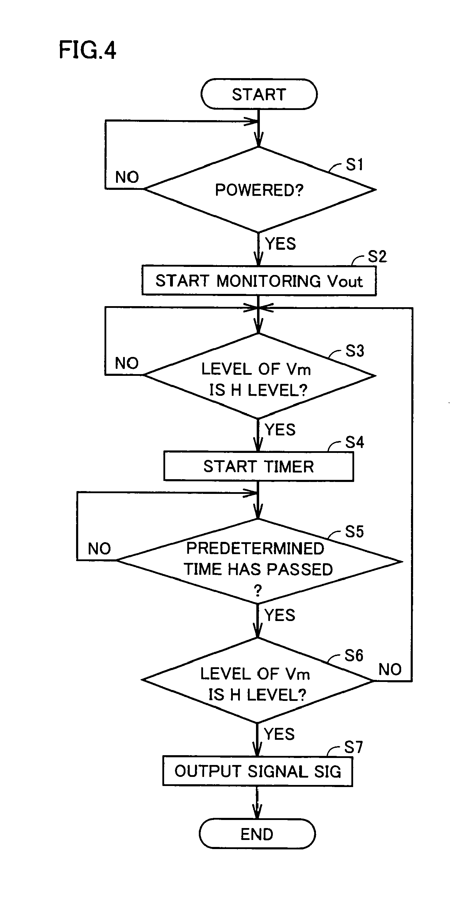

Fig. 4 is a flowchart illustrating a process followed by power supply control circuit 14.

Referring to Figs. 4 and 2, at the time when the process is started, power supply control circuit 14 is in the standby state. First, power supply control circuit 14 determines whether or not source device 2 is powered (step S1). In the case where source device 2 is not powered, signal SON is not input to power supply control circuit 14. In this case (NO in step S1), power supply control circuit 14 repeats the determination in step S 1 until receiving signal SON. On the contrary, in the case where power supply control circuit 14 receives signal SON, power supply control circuit 14 determines that source device 2 is powered. In this case (YES in step S1), power supply control circuit 14 starts monitoring voltage Vout (step S2). Specifically, power supply control circuit 14 monitors the level of voltage Vm to check whether or not voltage Vout decreases.

In the subsequent step S3, power supply control circuit 14 determines whether or not the level of voltage Vm is H level. In the case where the level of voltage Vm is not H level, namely the level of voltage Vm is L level (NO in step S3), power supply control circuit 14 repeats the determination in step S3. On the contrary, in the case where the level of voltage Vm is H level (YES in step S3), the power supply control circuit 14 starts an internal timer (step S4).

In step S5 subsequent to step S4, power supply control circuit 14 determines whether or not a predetermined time (100 milliseconds for example) has passed from the start of the timer. In the case where the predetermined time has not passed from the start of the timer (NO in step S5), the operation in step S5 is repeated until the predetermined time will have passed. On the contrary, in the case where the predetermined time has passed from the start of the timer (YES in step S5), the process proceeds to step S6.

In step S6, power supply control circuit 14 determines whether or not the level of voltage Vm is H level. In the case where the level of voltage Vm is H level (YES in step S6), power supply control circuit 14 determines that the level of voltage Vm is continuously H level for the predetermined time, and outputs signal SIG (step S7).

The fact that the level of voltage Vm is continuously H level for the predetermined time means that the state where voltage Vout decreases namely the state where overcurrent flows through power supply line 4A continues for the predetermined time. Therefore, in step S7, power supply control circuit 14 outputs signal SIG to stop voltage supply circuit 15. When the operation in step S7 is completed, the whole process is completed and the state of power supply control circuit 14 becomes the standby state.

On the contrary, in the case where the level of voltage Vm is not H level namely the level of voltage Vm is L level (NO in step S6), the process returns to step S3. The internal timer of power supply control circuit 14 stops measuring the time and is reset.

In step S6, in the case where the level of voltage Vm is L level, voltage Vout is higher than reference voltage Vref. In other words, overcurrent does not flow through power supply line 4A. Therefore, the operation in step S3 (monitoring the level of voltage Vm) is performed again.

As seen from the above, according to the present embodiment, even if it is detected that the level of voltage Vm is L level in step S3, power supply control circuit 14 does not immediately stop voltage supply circuit 15. Therefore, voltage supply circuit 15 can be prevented from being erroneously stopped in the case where voltage Vout is continuously low for an extremely short period of time for a certain reason.

For example, immediately after the source device is powered, voltage Vout could become lower even if the sink device normally operates. According to the present embodiment, voltage supply circuit 15 can be kept operated in the above-described case, and the sink device and the source device can be operated normally.

As described above, according to the present embodiment, source device 2 includes power supply apparatus 6 supplying a power supply voltage (voltage Vout) through HDMI cable 4 to a load (IC 5) included in sink device 1 connected by HDMI cable 4 to the source device. Power supply apparatus 6 includes voltage supply circuit 15 which outputs voltage Vout to HDMI cable 4 (power supply line 4A) and which stops outputting voltage Vout according to signal SIG, reference voltage source 12 which outputs a predetermined voltage as reference voltage Vref, comparator 13 which compares voltage Vout with reference voltage Vref and outputs voltage Vm showing the result of the comparison, and power supply control circuit 14 which receive voltage Vm and outputs signal SIG in the case where voltage Vout is continuously lower than reference voltage Vref for a predetermined period of time. In this way, overcurrent can be prevented from flowing to a device connected by a cable to the source device.

The information device of the present embodiment is a source device having the interface capability conforming to the HDMI standard. It should be noted that the present invention is widely applicable to information devices each having a power supply circuit supplying a power supply voltage through a cable to a load included in a device which is connected by the cable to the information device. Further, the device connected to the information device of the present invention is not limited to a device reproducing video data, and may be a device processing data received from he information device.

Although the present invention has been described and illustrated in detail, it is clearly understood that the same is by way of illustration and example only and is not to be taken by way of limitation, the scope of the present invention being interpreted by the terms of the appended claims.

## Claims

1. An information device comprising
a power supply circuit (6) connected to a data processing device (1) by a cable (4), and supplying a power supply voltage through said cable (4) to a load (5) included in said data processing device (1),
said power supply circuit (6) including:
a voltage supply unit (15) outputting said power supply voltage to said cable (4) and stopping outputting said power supply voltage according to a stop signal;
a reference voltage source (12) outputting a predetermined voltage as a reference voltage;
a comparison unit (13) comparing said power supply voltage with said reference voltage and outputting a comparison result; and
a control unit (14) receiving said comparison result and outputting said stop signal in a case where the control unit determines that said power supply voltage is continuously lower than said reference voltage for a predetermined period of time, and
said information device further comprising a data output circuit (7) outputting data to be processed to said data processing device (1) through said cable (4).

2. The information device according to claim 1, wherein
said cable (4) is a cable conforming to the HDMI (High Definition Multimedia Interface) standard,
said data to be processed is video data, and
said data processing device (1) reproduces said video data.

3. The information device according to claim 1, wherein
after said predetermined period of time has passed since said power supply voltage becomes lower than said reference voltage, said control unit (14) determines whether or not said power supply voltage is lower than said reference voltage, and determines, in a case where said power supply voltage is lower than said reference voltage, said power supply voltage is continuously lower than said reference voltage for said predetermined period of time.

4. The information device according to claim 1, wherein
said cable (4) is a cable conforming to the HDMI (High Definition Multimedia Interface) standard,
said data to be processed is video data,
said data processing device (1) reproduces said video data, and
after said predetermined period of time has passed since said power supply voltage becomes lower than said reference voltage, said control unit (14) determines whether or not said power supply voltage is lower than said reference voltage, and determines, in a case where said power supply voltage is lower than said reference voltage, said power supply voltage is continuously lower than said reference voltage for said predetermined period of time.
